# EUROPEAN PATENT SPECIFICATION

(11) **EP 2 813 324 B1**
(45) Date of publication and mention of the grant of the patent: **06.04.2016**
(21) Application number: 13171893.4
(22) Date of filing: 13.06.2013
(51) Int. Cl.: B25B 15/02

(54) **Hand tool having an electronic identification device**
Handwerkzeug mit elektronischer Identifizierungsvorrichtung
Outil à main ayant un dispositif d'identification électronique

(43) Date of publication of application: 17.12.2014
(73) Proprietor: Stanley Works (Europe) GmbH, 8600 Dübendorf (CH)
(72) Inventor: Lehovetzki, Axel, 93260 Les Lilas (FR)
(74) Representative: Kavanagh, Benjamin

(56) References cited:
- EP-A1- 2 372 617
- EP-A2- 0 330 870
- WO-A1-2006/100283
- WO-A2-2006/067447
- DE-A1-102008 013 588
- DE-A1-102008 031 372
- GB-A- 2 462 858

## Description

A Radio Frequency Identification (RFID) tag is a type of electronic identification device that may be used to identify and track various objects. In practice, an RFID tag is attached to an object, and an RFID reader senses the presence and identifying information associated with the RFID tag. The RFID reader may be located at an entrance or exit of an environment, thus facilitating the tracking and identifying of objects having RFID tags that enter or exit the environment.

RFID tags may be added to existing objects so that they may be tracked. To this end, an RFID tag may be mounted to the exterior of an object using adhesives or shrink wrap. However, by being mounted to the exterior of an object, the RFID tag may impede the intended functionality of the object.

Patent publication number WO2006/100283 discloses a hand tool according to the pre-characterising portion of claim 1.

It is an object of the present invention to provide RFID-enabled tools with improved features.

In an aspect of the present invention, there is provided a hand tool comprising a handle having a front portion and a back portion, a shaft having a working end and a connection end opposite the working end of the shaft, wherein the connection end of the shaft is connected to the front portion of the handle, and an electronic identification device, wherein the hand tool further comprises a cap connected to the handle, wherein the cap is configured to encapsulate the electronic identification device within a cavity defined by the handle and the cap, wherein the cap is formed of a material which is transparent or partially-transparent to radio frequency energy in order to facilitate the transmission of signals to or from the electronic identification device, wherein the shaft is made of metal, wherein the electronic identification device is connected to the shaft and wherein the cap is connected to the front portion of the handle.

The cap and handle conceal and protect the electronic identification device. Advantageously, the cap does not impede the functioning of the hand tool because it is adjacent to the handle

Preferably, the cap is substantially hemispherical shell with a central hole around the shaft and a substantially circular base connected the handle at a substantially circular section thereof. The hemispherical shell is suitable for gripping and does not impede grasping or manoeuvring of the handle.

Preferably, the cap is connected to the handle by an interference fit or by a snap fit between the cap and the handle.

Preferably, the cap is glued to the handle.

Preferably, the handle is formed of a material which is at least partially transparent to radio frequency energy.

Preferably, the interior of the cap is equipped with an elastomeric material for protection of the electronic identification device, wherein the handle has an irregular external profile which corresponds to an irregular external profile on the cap and wherein alignment of the irregular external profiles locates the elastomeric material over the electronic identification device.

Preferably, the material of the handle and/or the cap comprises a fluorescent pigment.

Preferably, the hand tool is any one of a nut-driver, a screwdriver, a bit driver, a hammer, a mallet, a wrench, a pair of scissors, a knife, a file, a scraper, a spatula, a chisel, a chisel holder, an awl, a punch, a brush, a broom, an axe or a pry bar.

In another aspect of the present invention, there is provided a method of assembling a hand tool of the first aspect, the method comprising the steps of connecting the cap to the handle and inserting a glue which is at least partially-transparent to radio frequency energy into the cavity defined by the handle and the cap through a hole in the cap thereby securing the cap and the electronic identification device to the hand tool. This may connect the cap to the handle and conceal and protect the electronic identification device in one manufacturing step.

Further features and advantages of the present invention will be understood by reference to the following description, which is given by way of example and in association with the accompanying drawings of which:
Figures 1A-1C are drawings of an adapter according to various embodiments of the present disclosure;
Figures 2A-2C are drawings of an adapter body of the adapter of Figures 1A-1C;
Figures 3A-3C are drawings of an adapter cover of the adapter of Figures 1A-1C;
Figure 4 is a drawing of the adapter of Figures 1A-1C attached to an inventory item according to various embodiments of the present disclosure;
Figures 5A-5C are drawings of a hand tool, with a handle and a shaft;
Figure 6A shows a top view of a hand tool with a flat handle;
Figure 6B shows a side view of the hand tool of Figure 6A;
Figure 6C shows a top view of a top cap of the hand tool of Figures 6A and 6B;
Figure 6D shows a cross-sectional view C-C of the top cap of Figure 6C; Figure 6E shows a bottom view of a bottom cap of the hand tool of Figures 6A and 6B;
Figure 6F shows a cross-sectional view E-E of the bottom cap of Figure 6E;
Figure 6G shows detail A of the hand tool of Figures 6A and 6B;
Figure 7 shows a cross-sectional view of a hex key coated with PVC; and
Figure 8 shows the hex key of Figure 7 with a pocket of the PVC coating lifted up;
Figure 9 shows a cross-sectional view of a hand wrench coated with PVC.

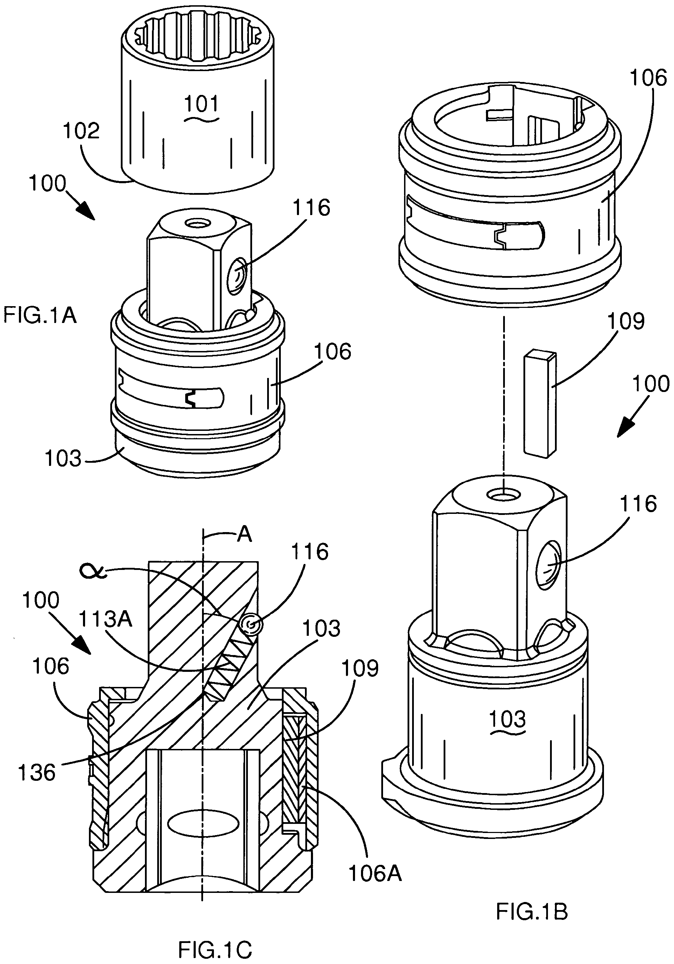

In an aspect of the present invention, Figures 1A - 4 show an adapter for an inventory item having an electronic identification device. Existing inventory items, such as but not limited to, socket tools, air tool fittings, driver bits (*e.g*., Phillips bits, flathead bits, hex-head bits, TORX® bits, APEX® bits, *etc*.) alien wrenches, hoses, welding equipment, medical equipment, or any inventory item having a universal attachment fitting, may be retrofitted to become RFID-enabled while maintaining the intended functionality of the inventory items. In general, the present disclosure is directed towards permanently attaching an adapter equipped with an electronic identification device to an inventory item. As used herein, the term "permanently attached" refers to an attachment that is not intended to be removed, unless defeated by component failure, unauthorized removal, or other types of unintended activity. As a non-limiting example, one end of an adapter equipped with an RFID tag is configured to permanently attach to one or more inventory items, such as a socket, a conventional socket adapter, a crowfoot wrench, *etc.,* while the other end of the adapter is configured to removably attach to a socket driver. As such, the adapter, RFID tag, and socket may be a substantially unitary piece. By being configured to permanently attach to a universal attachment fitting, one adapter style may be produced that is capable of permanently attaching to multiple sizes and styles of sockets.

With the RFID enabled adapter permanently attached to a socket or other type of inventory item, an RFID reader may identify or track the inventory item by sensing signals emitted from the RFID tag. For example, an RFID tag reader may be installed at an entrance or exit of an environment, and the activity associated with the inventory item may be monitored. This monitoring may be especially useful, for example, in operating rooms where it is extremely important to track medical tools, in mechanical environments where a lost tool may cause damage to equipment, in an environment where inventory item theft may be a concern, or in other environments.

In addition and complementary to the monitoring capabilities provided by electronic identification devices, fluorescent pigments are also useful in facilitating tracking or items and retrieval of misplaced items in an environment. For example, when applied to a tool or adapter, or added to a PVC coating, the fluorescent pigment can enable easy identification by sight.

In the following discussion, a general description of the apparatus and its components are provided, followed by a discussion of the operation of the same.

With reference to Figures 1A-1C, shown is an adapter 100 according to an embodiment of the present disclosure. The adapter 100 shown in Figures 1A-1C is configured to become a substantially unitary piece with the inventory item 101. The inventory item 101 has a female fitting 102 facilitating attachment between the adapter 100 and inventory item 101. As may be appreciated, the female fitting 102 is common to other related inventory items 101 so that a common tool (*e.g*., a socket driver) may be attached to several inventory items 101. In this sense, the female fitting 102 may be considered one example, among others, of a universal attachment fitting. Additionally, a universal attachment fitting in various embodiments may be, for example but not limited to, male fittings, threaded joints, quick-release couplings, or any other universal attachment fitting being a deliberate mechanical point of connection for the inventory item 101.

In the embodiment shown, the inventory item 101 is embodied in the form of a socket. It is understood that in alternative embodiments, the inventory items 101 may be, for example but not limited to, socket tools, air tool fittings, driver bits (*e.g*., Phillips bits, flathead bits, hex-head bits, TORX® bits, APEX® bits, *etc*.) alien wrenches, hoses, welding equipment, medical equipment, or any inventory item having a universal attachment fitting. The adapter 100 may also be preconfigured to be attached to another inventory item 101 or tool such as, for example, a preexisting fitting of a powered or manual driver tool (not shown).

The adapter 100 includes an adapter body 103, an adapter cover 106, an electronic identification device in the form of an RFID tag 109, a biasing member in the form of a spring 113, and a detent or retaining element 116. The adapter cover 106 surrounds a portion of the adapter body 103 and helps to secure the RFID tag 109 to the adapter body 103. The adapter cover 106 is transparent or partially-transparent to radio frequency energy to facilitate the RFID tag 109 transmitting and/or receiving signals.

The retaining element 116 is disposed at least partially within the adapter body 103 and facilitates retaining the adapter 100 to an inventory item 101, as will be described later. As will be described later, the spring 113 biases the retaining element 116 to protrude a small way from the adapter body 103 to facilitate permanent attachment of the adapter 100 to the inventory item 101.

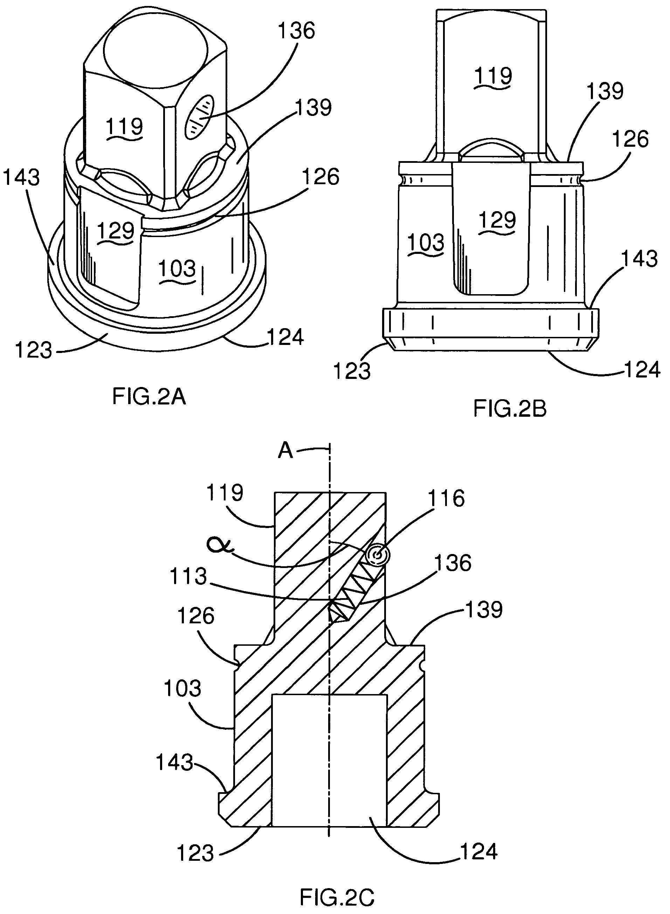

Turning to Figures 2A-2C, there is shown is the adapter body 103 which includes a first, male end 119, configured to be received in a female fitting 102 (Figure 1 A) of the inventory item 101 (Figure 1A). Opposite of the first, male end 119 is a second, female end 123 and a female recess 124 configured to receive, for example, a socket driver.

As will be described below, in the embodiment shown, the first, male end 119 is configured to permanently attach to the inventory item 101, while the second, female end 123 is preconfigured to attach to, for example, a male end of a socket driver tool or another type of powered or manual tool (not shown). It is understood that although the embodiment shown has a male end 119 and a female end 123, both the first and second ends may be male or both ends may be female in alternative embodiments.

Although shown in Figures 2A-2C as being formed of a single unit, the adapter body 103 may instead comprise multiple components that are assembled to form the adapter body 103. For example, the male end 119 may be detached from the remainder of the adapter body 103. In such a case, during assembly, the male end 119 may be attached to the remainder of the adapter body 103 by a weld or other permanent attachment methods.

The adapter body 103 includes a groove 126, a recess 129, a bore 136, an edge 139 and a rim 143. The groove 126 extends at least partially circumferentially around the adapter body 103. The recess 129 is a depressed region of the adapter body 103 and takes a shape that is slightly larger than the RFID tag 109 or a holder of the RFID tag 109.

The bore 136 is a blind bore which is inclined at an angle α in relation to a longitudinal central axis A of the adapter body 103. Angle α = 35 degrees +/- 1 degrees. The bore 136 extends from an open mouth end at an outer surface of the male end 119 towards the central axis A and the female end 123 where it terminates at a closed end. The bore 136 is configured to receive the biasing member in the form of a compression spring 113. The bore is configured to slidingly receive the retaining element 116. The spring 113 biases the retaining element 116 towards the open mouth end at the outer surface of the male end 119. The depth of the bore is approximately 5mm along its central axis of elongation.

The edge 139 is a surface configured to be adjacent to the inventory item 101. The rim 143 is disposed along the adapter body 103 towards the female end 123. Both the edge 139 and rim 143 facilitate attaching and retaining the adapter cover 106 to the adapter body 103 as will be described later.

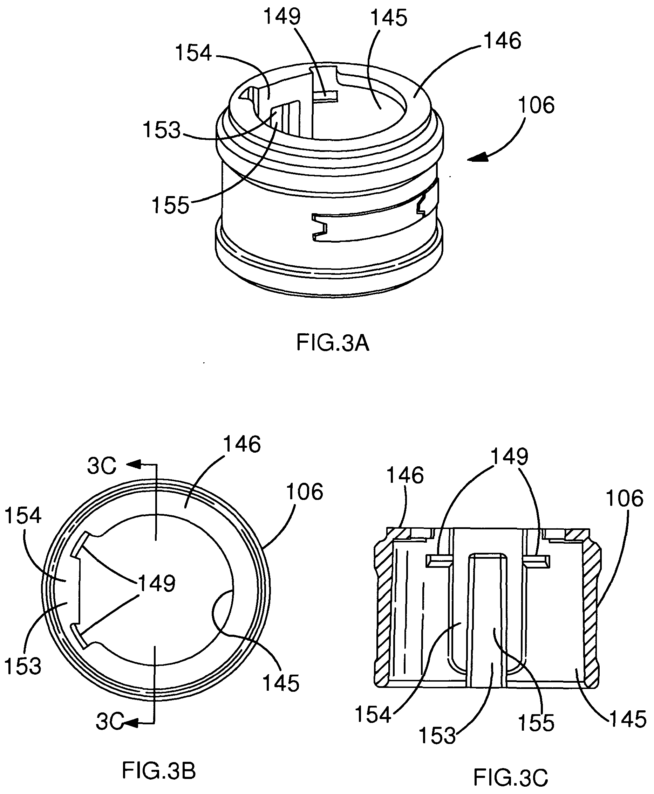

With reference now to Figures 3A-3C, there is shown is an example of an adapter cover 106 according to an embodiment of the present invention. The adapter cover 106 shown in Figures 3A-3C is embodied in the form of a collar that surrounds a portion of the adapter body 103. The adapter cover 106 acts as a covering to protect and/or permanently secure the RFID tag 109 to the adapter body 103. In alternative embodiments, the adapter cover 106 may partially cover a portion of the adapter body 103, instead of completely surrounding the circumference of the adapter body 103.

The adapter cover 106 includes an interior surface 145 extending through the adapter cover 106 for at least a portion of the adapter body 103 to pass through the adapter cover 106. The adapter cover 106 may be constructed of nylon or other plastic-type materials to facilitate transmission of signals to and from the RFID tag 109. However, it is understood that the adapter cover 106 may be constructed of other materials that are transparent to radio frequency energy. The material of the adapter cover 106 may have a fluorescent pigment. This facilitates tracking the adapter 100 and inventory item 101 by sight, especially with the help of a flashlight which emits ultra-violet light. This may be beneficial when tracking a misplaced inventory item in a complex environment with multiple parts, such as in an aero-engine or a railway locomotive. The preferred colour is yellow + fluorescent pigment.

The adapter cover 106 also includes a lip 146, one or more detents 149, a receptacle 153, and possibly other features not discussed in detail herein. The lip 146 extends from an interior surface at an end of the adapter cover 106. Although shown in Figures 3A-3C as extending from most of the circumference of the adapter cover 106, the lip 146 may instead extend from only a portion of an end of the adapter cover 106. Additionally, in alternative embodiments, the adapter cover 106 may include multiple lips 146 located at one or both ends of the adapter cover 106.

The one or more detents 149 are disposed on the interior surface 145 of the adapter cover 106. Although shown in Figures 3A-3C as being located adjacent to the receptacle 153, the one or more detents 149 are located opposite of the receptacle 153, causing the RFID receptacle to be snug against the adapter body 103. Further, it is understood that the one or more detents 149 or other types of restrictions may be disposed anywhere along the interior surface 145 of the adapter cover 106. As will be described below, the detents 149 aid in aligning the adapter cover 106 with the adapter body 103 during assembly of the adapter 100. Further, the detents 149 facilitate attachment of the adapter cover 106 to the adapter body 103 during assembly of the adapter 100.

The receptacle 153 includes a frame 154 extending from the interior surface 145 of the adapter cover 106 and a pocket 155 configured to receive the RFID tag 109. The receptacle 153 may aid in aligning the adapter cover 106 with the adapter body 103 during assembly of the adapter 100. Further, the receptacle 153 may provide cushioning or protection for the RFID tag 109. For example, the adapter cover 106 may have an internal damping web 106a compressed against the RFID tag 109 to help hold the latter more securely. Alternatively, the damping web may be replaced by a layer of flexible cellular or elastomeric material 106a.

Referring back to Figures 1A-1C, the RFID tag 109 is a type of electronic identification device that emits an identifying signal that is capable of being received by an appropriate RFID reader. The identifying signal may include data that uniquely corresponds to the RFID tag 109, thereby facilitating the identification of an object to which the RFID tag 109 is attached. The RFID tag 109 may be active, semi-active, or passive and may or may not include storage memory. In alternative embodiments, the functionality of the RFID tag 109 may be replaced with other types of electronic identification devices capable of emitting an identifying signal and being receivable by an appropriate receiving device.

The retaining element 116 facilitates permanently attaching the adapter 100 to the female fitting 102 of the inventory item 101. In the embodiment shown, the retaining element 116 is embodied in the form of a metal spherical ball. Additionally, it is noted that one or more retaining elements 116 each with a respective bore 136 may be used.

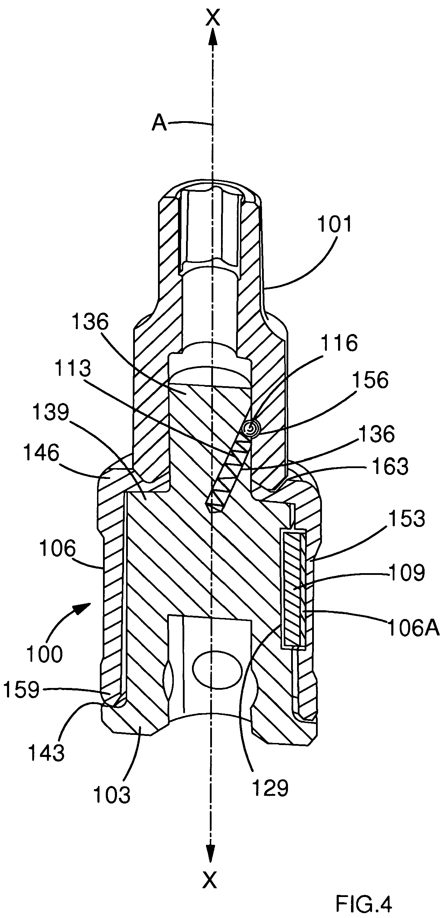

The retaining element 116 is configured to be retained, at least partially, in the bore 136 of the adapter body 103. Additionally, the retaining element 116 is configured to be retained in a complementary receiving recess 156 (Figure 4) of the inventory item 101. The receiving recess 156 is a recess in an internal face of the inventory item 101. The retaining member 116 is shaped to be at least partially nested within the receiving recess 156. As will be discussed, the retaining element 116 is configured to move from a retracted position, with the retaining element 116 at least partially within the adapter body 103, to a locking position, with the retaining element 116 disposed at least partially in the receiving recess 156 of the inventory item 101. As mentioned above, the spring 113 biases the retaining element 116 from the retracted position to the locking position.

Next, a description of the operation of the various components of one example, among others, of the adapter 100 is provided. Turning to Figure 4, shown is the adapter 100 and its interaction with an inventory item 101 according to various embodiments. The adapter 100 is permanently attached to the inventory item 101.

In order to assemble the adapter 100, the RFID tag 109 is placed in the receptacle 153 of the adapter cover 106, and the adapter cover 106 is slid over the adapter body 103. The detents 149 (Figure 3A-3C) and lip 146 of the adapter cover 106 facilitate proper alignment of the adapter cover 106 with respect to the adapter body 103. To this end, the detents 149 of the adapter cover 106 align with and/or snap into the groove 126 (Figures 2A-2C) of the adapter body 103, thereby indicating proper alignment and facilitating attachment of the adapter cover 106 to the adapter body 103. Similarly, the lip 146 of the adapter cover 106 abuts the edge 139 of the adapter body 103, and an end 159 of the adapter cover 106 abuts the rim 143 of the adapter body 103. Thus, the adapter cover 106 may be properly aligned in a longitudinal direction during assembly of the adapter 100.

In a similar fashion, the recess 129 of the adapter body 103 and receptacle 153 of the adapter cover 106 facilitate proper rotational alignment of the adapter body 103 with respect to the adapter cover 106. Because the recess 129 is configured to accommodate the shape of the receptacle 153, proper rotational alignment during assembly is apparent during assembly. Additionally, the adapter cover 106 is prevented from rotating after assembly.

The retaining element 116 is in the bore 136 of the adapter body 103, and the inventory item 101 is placed on the appropriate end of the adapter body 103. The lip 146 of the adapter cover 106 may compress between the edge 139 of the adapter body 103 and an end 163 of the inventory item 101. When the inventory item 101 is permanently attached to the adapter 100, such compression between the edge 139 of the adapter body 103 and the end 163 of the inventory item 101 facilitates the adapter cover 106 being permanently attached to the adapter body 103.

The spring 113 biases the retaining element 116 to extend from the retracted position to the locking position where the retaining element 116 received in the receiving recess 156 of the inventory item 101. The inventory item 101 cannot be pulled apart from the adapter body 103 in the direction of double-headed arrow X because, due to the inclination of the bore 136 a side of which acts as a wedge, pulling in this direction tends to wedge the retaining element 116 against the receiving recess 156 and, in doing so, reinforce engagement between the retaining element 116 and the receiving recess 156. Once the retaining element 116 is engaged with the receiving recess 156, the adapter 100 is permanently attached to the inventory item 101.

It may be beneficial to apply glue at the interface between the adapter 100 and the inventory item 101 to eliminate any rattle that may exist between the components. This helps to reassure an operator that the adapter 100 and the inventory item 101 are permanently attached.

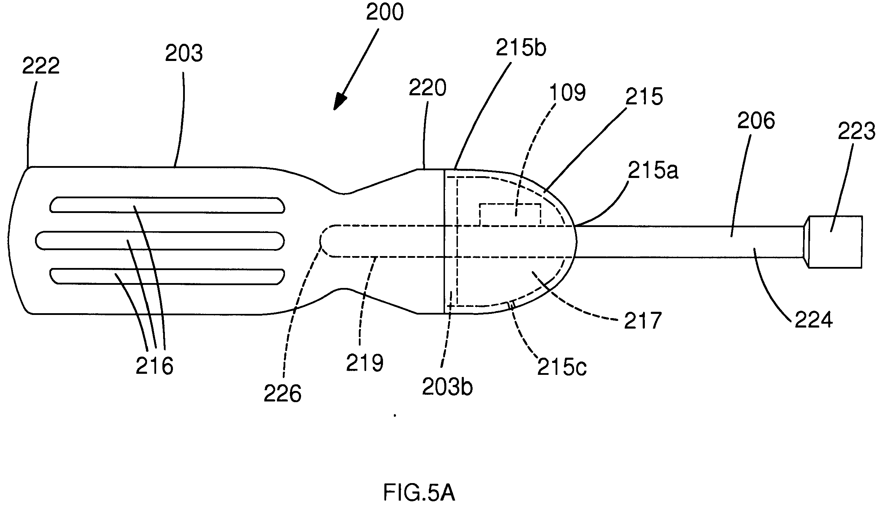

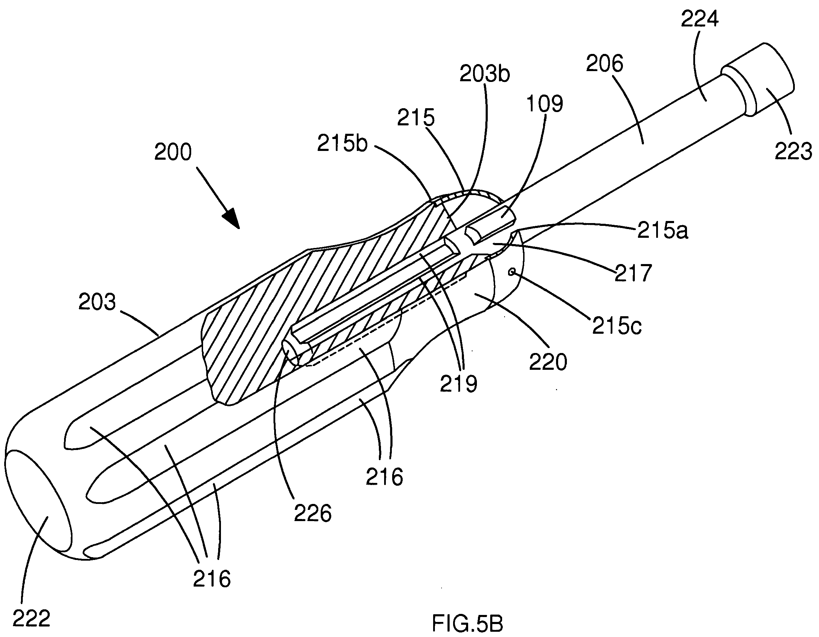

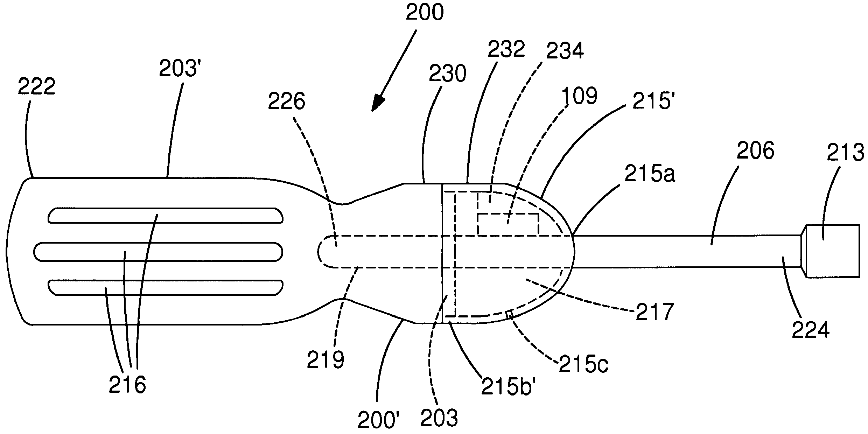

In a further aspect of the present invention, Figures 5A-5B show a hand tool having an electronic identification device. The hand tool includes a cap with a cavity configured to encapsulate an RFID tag. The cap provides a seal with respect to the cavity, thereby protecting the RFID tag from being exposed to corrosive chemicals. Additionally, by the RFID tag being in the interior of the cap, the RFID tag may be shielded or cushioned from impacts. Even further, by being placed in the interior of the cap, the RFID tag may not interfere with the intended functionality or appearance of the hand tool. In the following discussion, a general description of the system and its components is provided, followed by a discussion of the operation of the same.

With reference to Figures 5A-5B, shown is a hand tool 200 according to various embodiments of the present disclosure. The hand tool 200 includes a handle 203 having a front portion 220 and a back portion 222, a shaft 206 having a first working end 224 and a second connection end 226, an electronic identification device 109, and a generally hemi-spherical cap 215. The hand tool 200 shown is embodied in the form of a nut-driver. However, the hand tool 200 may be embodied in the form of, for example but not limited to, a screwdriver, a bit driver, a hammer, a mallet, a wrench, a cutting tool (*e.g.,* scissors, a knife, *etc*.), a file, a scraper, a spatula, a chisel, a chisel holder, an awl, a punch, a brush, a broom, an axe, a pry bar, an extension mirror, an extension magnet, a level, or any other type of hand tool 200.

The handle 203 is a portion of the hand tool 200 that is configured to be gripped by a user, as may be appreciated. For example, in the case in which the hand tool 200 is a nutdriver, the handle 203 is the portion of the nutdriver that a user grips and rotates in order to tighten or loosen a fastener (not shown). The handle 203 includes multiple grooves 216 to facilitate a grip by a user. The handle 203 comprises a nylon or other plastic-type material that is transparent or partially-transparent to radio frequency energy, in order to facilitate the transmission of signals to or from the electronic identification device 109.

The shaft 206 is made of metal. The shaft 206 is attached to and extends from the handle 203. The connection end 226 of the shaft 206 is moulded into the handle 203 at the front portion 220 of the handle. To secure the shaft 206 to the handle, and to prevent rotation of the shaft 206 with respect to the handle 203, the connection end 226 of the shaft 206 that is disposed in the handle 203 includes multiple outwardly extending fins 219.

At the working end 224 of the shaft 206 is a driver 223. The driver 223 may be configured to receive and rotate fasteners (such as but not limited to, screws, bolts, nuts, *etc*.), bits (*e.g*. Phillips bits, flathead bits, hex-head bits), or other items.

The RFID tag 109 is of the type which is designed to contact a metal object. The RFID tag 109 is secured to the shaft 206 at a location near the handle 203. The RFID tag 109 may be secured by any suitable means, such as adhesive or shrink wrap. The RFID tag 109 emits an identifying signal that is capable of being received by an appropriate reader (not shown). The identifying signal may include data that uniquely corresponds to the RFID tag 109, thereby facilitating the identification of the hand tool 200 to which the electronic identification device 109 is attached. The RFID tag 109 may be active, semi-active, or passive and may or may not include storage memory. In various embodiments, the electronic identification device 109 may be embodied in the form of an RFID tag or another type of electronic identification device 109 capable of emitting an identifying signal. Advantageously, contact with the metal shaft 206 has the effect of amplifying emission, and reception, of the signal to, and from, the RFID tag 109. The amount of amplification is proportional to the size of the metal object to which the RFID tag 109 is connected.

The cap 215 is a generally hemi-spherical shell. The cap 215 has a central hole 215a surrounding the shaft 206 and a circular base 215b which has approximately the same outer diameter as the front portion 220 of the handle 203 against which it abuts. The front portion 220 of the handle has a crown 203b of reduced diameter which protrudes a small way inside the base 215b of the cap 215. Friction between the central hole 215a of the cap 215 and the shaft 206 and/or an interference fit between the base 215b of the cap 215 and the crown 203b secures the cap 215 on the hand tool 200. A snap-fit between the base 215b of the cap 215 and the crown 203b may alternatively be used to secure the cap 215 on the hand tool 200. For additional security, the base 215a of the cap 215 may be glued to the crown 203b. The cap 215 and the front portion 220 of the handle 203 combine to form a cavity 217 which encapsulates the RFID tag 109. The cap 215 has a small hole 215c in one side through which glue may be injected to fill the cavity 217 and to secure the cap 215 and RFID tag 109 permanently on the hand tool 200. If the injection of glue into the cavity provides a sufficient adhesion between the cap and the handle, it may not be necessary to glue the base 215a of the cap 215 to the crown 203b beforehand.

In order to facilitate transmission of signals to and from the RFID tag 109, the cap 215 and any glue comprises material that is transparent or partially-transparent to radio frequency energy. The cap 215 and the RFID tag 109 may be fitted to a new hand tool 200, or retro-fitted to a preexisting hand tool 200. The front portion 220 of the handle 203 may alternatively have a non-circular external profile, and the base 215b of the cap 215 may have a corresponding non-circular internal profile. For example, as shown in Figure 5C, the circumference of the front portion 220' of the handle 203' may have a short flat side 230 corresponding to a short flat side 232 in the circumference of the otherwise circular base 215b' of the cap 215'. This is to ensure that the handle 203' and the cap 215' are correctly aligned during assembly. This is because part of the interior of the cap 215' may be equipped with elastomeric material 234, such as foam, which should be located over the RFID tag 109 to protect it from impact.

The material of the handle 203 and/or the cap 215 may be fluorescent. The preferred colour is yellow + fluorescent pigment. This facilitates tracking the hand tool 200 by sight, especially with the help of a flashlight which emits ultra-violet light. This may be beneficial when tracking a misplaced hand tool in a complex environment with multiple parts, such as in an aero-engine or a railway locomotive.

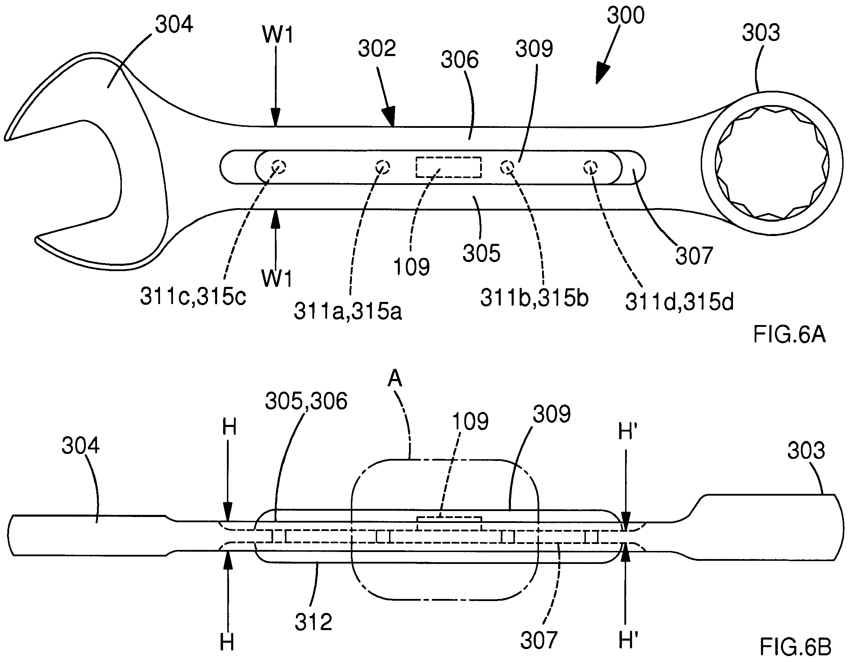

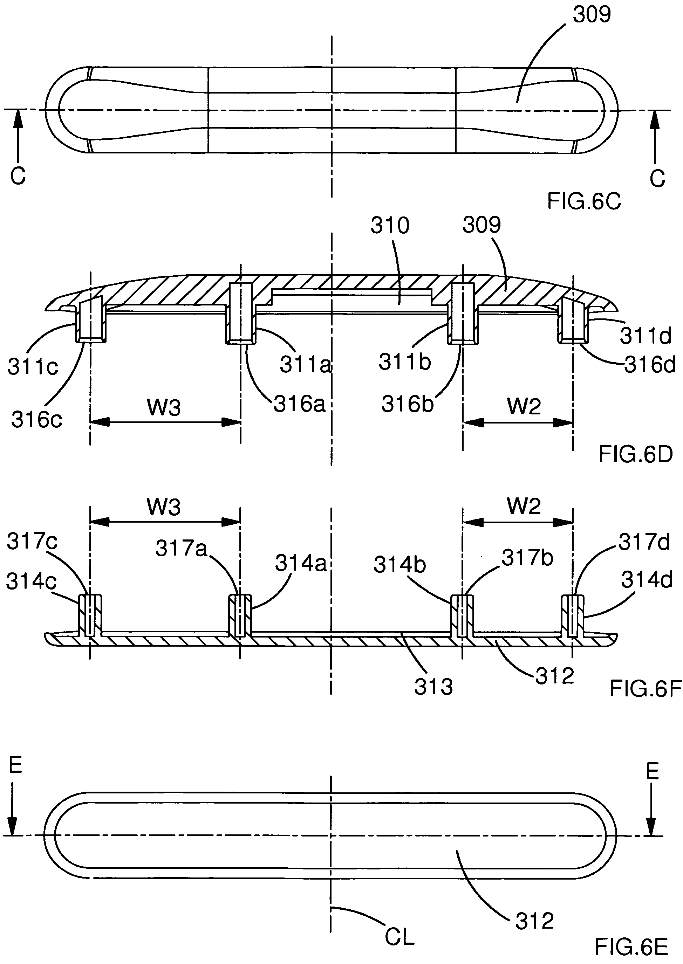

In a further aspect of the present invention, Figures 6A to 6G show a hand tool with a flat handle having an electronic identification device such as an RFID tag. The hand tool includes a pair of caps which form at least one cavity configured to encapsulate an RFID tag. The caps provide a seal with respect to the cavity, thereby protecting the RFID tag from being exposed to corrosive chemicals. Additionally, by the RFID tag being in the interior of the cap and the handle, the RFID tag is shielded or cushioned from impacts. Even further, by being placed in the interior of the caps, the RFID tag does not interfere with the intended functionality of the hand tool. In the following discussion, a general description of the system and its components is provided, followed by a discussion of the operation of the same.

Referring to Figures 6A to 6B, there is shown a hand tool in the form of hand wrench 200 with an elongate generally flat body 302 made of metal. The hand tool shown is a hand wrench, but it may be another tool with a flat metal handle such as a ratchet wrench, a socket wrench, a torque wrench or an adjustable wrench, for example.

The hand wrench 300 comprises a ring socket 303 at a first end and an open socket 304 at a second end opposite to the first end. The body 302 has a width W1 in a plane containing the ring socket 303 and the open socket 305. The maximum height H of the body 302 is measured in a direction perpendicular to the plane containing the ring socket 303 and the open socket 305. The width W1 is approximately two or three times greater than the height H. The body 302 acts as the flat handle of the hand wrench 300 which is grasped and manipulated by an operator when tightening or loosening a nut or a bolt.

The body 302 comprises a first outer strip 305, and a second outer strip 306, the outer strips 305, 306 extending along each outer edge of the body 302, and an elongate middle strip 307 between the outer edges and between the sockets 303, 304. The middle strip 307 is recessed within the body 302 such that the height H' of the middle strip 307, is approximately half the height H of the outer strips 305, 306. In use, when a nut or a bolt is being loosened or tightened, the middle strip 307 is largely mechanically neutral because most of the torque is transmitted to the sockets 303, 304 via the outer strips 305, 306.

The hand wrench 300 comprises an electronic identification device 109 in the form of an RFID tag or another type of electronic identification device 109 capable of emitting an identifying signal. The hand wrench comprises a top cap 309 and a bottom cap 312 to protect the RFID tag 109. The caps 309, 312 comprise a nylon or other plastic-type material that is transparent or partially-transparent to radio frequency energy, in order to facilitate the transmission of signals to or from the electronic identification device 109. The RFID tag 109 is of the type which is designed to contact a metal object. The RFID tag 109 is secured to the body 302 at the middle strip 307 approximately midway between the ring socket 303 and the open socket 304. The RFID tag 109 may be secured by any suitable means, such as adhesive. The RFID tag 109 emits an identifying signal that is capable of being received by an appropriate reader (not shown). The identifying signal may include data that uniquely corresponds to the RFID tag 109, thereby facilitating the identification of the hand tool 300 to which the RFID tag 109 is attached. The RFID tag 109 may be active, semi-active, or passive and may or may not include storage memory. Advantageously, contact with the metal body 302 has the effect of amplifying emission, and reception, of the signal to, and from, the RFID tag 109. The amount of amplification is proportional to the size of the metal shaft which acts as an antenna.

The top cap 309 and the bottom cap 312 are each a generally elongate lozenge shell shaped to fit within the confines of the middle strip 307. The top and bottom caps are attached to opposite sides of the middle strip 307. The top cap 309 is a shell which forms a top cavity 310 between the top cap 309 and the middle strip 307. Unlike the top cap 309, the bottom cap 312 is generally flat. Whilst there may be a small gap 313 between the bottom cap 312 and the middle strip 307, the gap 313 is a lot smaller than the top cavity 310. The bottom cap 312 may be flush against the middle strip 307 in which case the gap 313 may not exist.

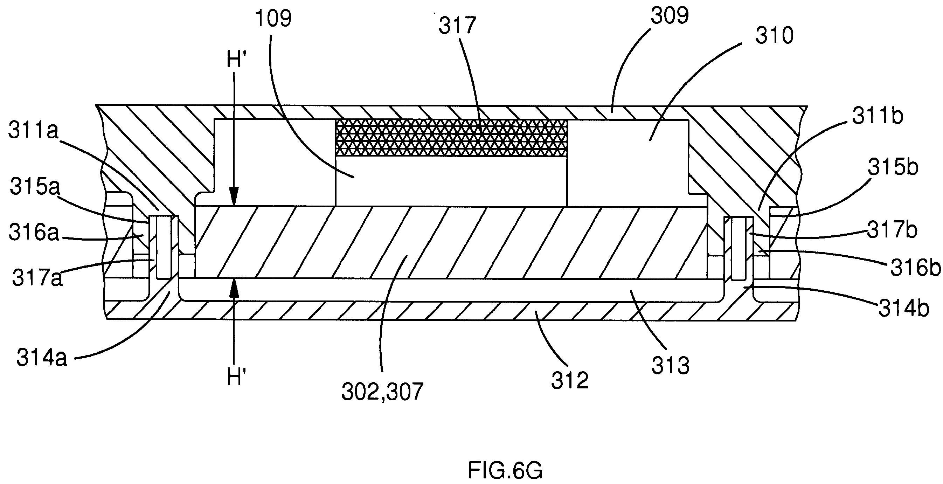

The outer surface of each of the top cap 309 and the bottom cap 312 is rounded to facilitate the comfort of an operator manipulating the body 302 of the hand wrench 300. The top cap 309 has four dowels 311a, 311b, 311c, 311d extending from its inner surface and protruding towards a respective dowel 314a, 314b, 314c, 314d extending from the inner surface of the bottom cap 312. The middle strip 307 has four holes 315a, 315b, 315c, 315d through the body 302. Since the holes 315a, 315b, 315c, 315d are in the middle strip 307, the transmission of torque along the body 302 of the hand wrench 300 is largely unaffected by the presence of the through-holes. Each through-hole 315a, 315b, 315c, 315d is aligned with a respective pair of dowels 311a, 314a; 311b, 314b; 311c, 314c; and 311d, 314d. Each pair of dowels is joined to secure the caps on the body 302 which is sandwiched between the top cap 309 and the bottom cap 312. The pairs of dowels may be joined by any suitable means such as snap-fit or with screws. As is shown in more detail in Figure 6G, each dowel 311 a, 311 b of the top cap 309 terminates with a ring 316a, 316b which receives a pin 317a, 317b protruding from the end of a respective dowel 314a, 314b of the bottom cap 312. An interference fit between the pins 317a, 317b and the rings 316a, 316b aligns the pairs of dowels 311a, 314a; 311b, 314b and secures the top cap 309 and the bottom cap 312 together. For additional security, the pins 317a, 317b may be glued to the rings 316a, 316b. A relatively small hand wrench may have only two holes 315a, 315b for two pairs of dowels 311 a, 314a, 311 a, 314b. However, most hand wrenches are large enough to have a multitude of through-holes and a corresponding number of pairs of dowels to secure the top and bottom caps along the length of the middle strip.

As mentioned above, the top cap 309 is configured to encapsulate the RFID tag 109 within the cavity 310. For additional protection, the top cap 309 may have an internal damping web 317 abutting against the RFID tag 109 to help hold the latter more securely. Alternatively, the damping web may be replaced or complemented by a layer of flexible cellular or elastomeric material 317. In order to facilitate transmission of signals to and from the RFID tag 109, the top cap 309 and the bottom cap 312 comprise a nylon or other plastic-type material that is transparent or partially-transparent to radio frequency energy. The top cap 309, the bottom cap 312, the RFID tag 109 and the elastomeric material 317 may be fitted to a new hand wrench 300, or retro-fitted to a preexisting hand wrench 300, with the only modification being the holes 315a, 315b drilled through the middle strip 307.

Referring to Figures 6D and 6F, there is shown the top cap 309 with four dowels 311a, 311b, 311c, 311d protruding downward. The distance W2 between the pair of dowels 311 b, 311 d on one side of a centre line CL through the top cap 309 is slightly less than the distance W3 between the pair of dowels 311a, 311c on the other side of the centre line CL through the top cap 309. The holes 315a, 315b, 315c, 315d in the middle strip 307 of the body 302 and the dowels 314a, 314b, 314c, 314d of the bottom cap 312 are aligned with their respective dowel 311a, 311 b, 311c, 311 d of the top cap 309. Accordingly, the distance W2 is between the holes 315b and 315d and between dowels 314b and 314d. The distance W3 is between the holes 315a and 315c and between the dowels 314a and 314c. The difference between distances W2 and W3 ensures that the holes and the dowels do not align unless the top cap 309 and the bottom cap 312 are orientated about the centre line CL in the correct rotational sense during assembly. The assembly method is simple and therefore more cost-effective than previously used methods, for example using complex milling operations to provide undercuts in the outer strips 305, 305 to retain the top cap 309 on the body 302.

The material of the caps 309, 312 may be fluorescent. The preferred colour is yellow + fluorescent pigment. This facilitates tracking the hand tool 300 by sight, especially with the help of a flashlight which emits ultra-violet light. This may be beneficial when tracking a misplaced hand tool in a complex environment with multiple parts, such as in an aero-engine or a railway locomotive.

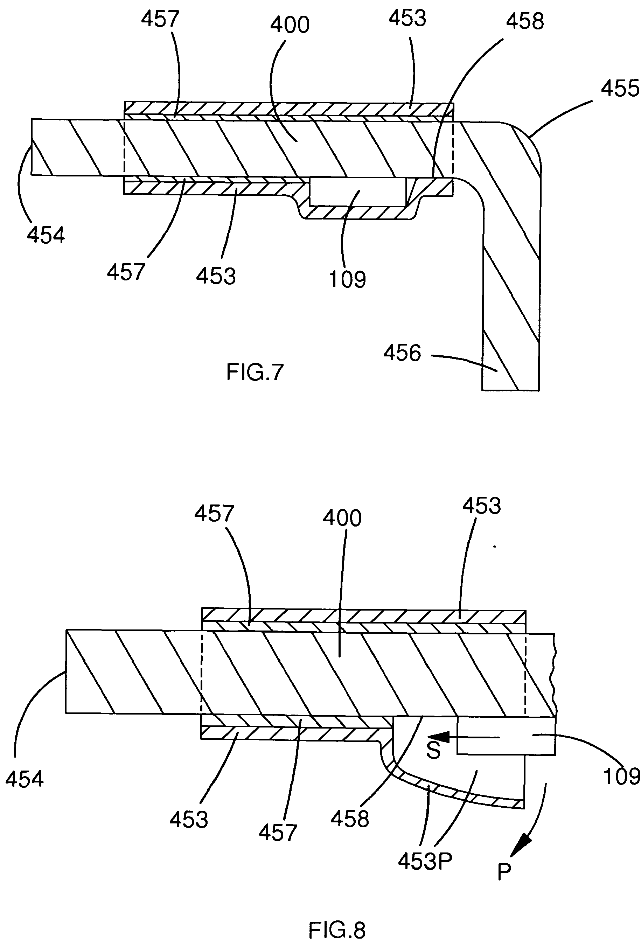

In a further aspect of the present invention, Figures 7 to 9 show a hand tool with an electronic identification device such as an RFID tag, wherein the tool does not have enough space or material to attach a pair of caps like those discussed above in relation to a hand tool with a flat handle. The hand tool may be a hex key, pair of pliers, or a small diameter hand wrench, for example. The RFID tag is attached to a face of the tool and coated with a layer of PVC to protect the RFID tag from corrosive chemicals and cushion it from impacts.

Referring to Figures 7 and 8, there is shown a hex key 400 made of metal with a RFID tag 109 attached to one of its six flat faces. The longer of the two limbs of the hex key 400 is coated about its circumference with a layer 453 of PVC. The layer 453 of PVC extends from near an end 454 of the longer limb of the hex key to near the elbow 455 of the hex key. The RFID tag 109 is encapsulated between the hex key 400 and the layer 453 of PVC. The layer 453 of PVC helps to protect the RFID tag 109 from impacts. The layer 453 of PVC may be gripped by an operator manipulating the hex key 400. An end 456 of the shorter limb of the hex key 400 is used to engage a hex recess in a cap-head screw, for example. The PVC is elastic and it is transparent or partially-transparent to radio frequency energy, in order to facilitate the transmission of signals to and from the RFID tag 109. The RFID tag 109 is of the type which is designed to contact a metal object. Advantageously, contact with the metal hex key 400 has the effect of amplifying emission, and reception, of the signal to, and from, the RFID tag 109. The amount of amplification depends on the size of the metal object which acts as an antenna.

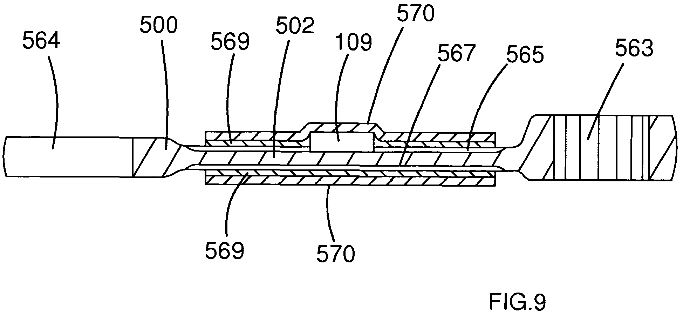

Referring to Figure 9, there is shown a hand tool in the form of hand wrench 500 with an elongate body 502 made of metal. The hand tool 500 shown is a hand wrench with a relatively small body 502. The hand wrench 500 comprises a ring socket 563 at a first end and an open socket 564 at a second end opposite to the first end. The body 502 has a width that is too small to drill holes and support protective caps like those described above in relation to hand wrench 300. The body 502 acts as the flat handle of the hand wrench 500 which is grasped and manipulated by an operator when tightening or loosening a nut or a bolt.

The body 502 has an outer strip 565 extending along each outer edge of the body and an elongate middle strip 567 between the outer edges and between the sockets 563, 564. The middle strip 567 is recessed within the body 2. When a nut or a bolt is being loosened or tightened, the middle strip 567 is largely mechanically neutral because most of the torque is transmitted to the socket 563, 564 via the outer strips 565.

The hand wrench 500 comprises an electronic identification device 109 in the form of an RFID tag or another type of electronic identification device 109 capable of emitting an identifying signal. The hand wrench comprises a layer 570 of PVC. The RFID tag 109 is encapsulated between the middle strip 567 of the body 502 and the layer 570 of PVC. The layer 570 of PVC protects the RFID tag 109. The PVC is elastic and it is transparent or partially-transparent to radio frequency energy, in order to facilitate the transmission of signals to the RFID tag 109. The RFID tag 109 is of the type which is designed to contact a metal object. The RFID tag 109 is secured to the body 502 at the middle strip 567 approximately midway between the ring socket 563 and the open socket 564. The RFID tag 109 may be secured by any suitable means, such as adhesive. The RFID tag 109 emits an identifying signal that is capable of being received by an appropriate reader (not shown). The identifying signal may include data that uniquely corresponds to the RFID tag 109, thereby facilitating the identification of the hand tool 500 to which the RFID tag 109 is attached. The RFID tag 109 may be active, semi-active, or passive and may or may not include storage memory. Advantageously, contact with the metal body 502 has the effect of amplifying emission, and reception, of the signal to, and from, the RFID tag 109 depending on the size of the metal object which acts as an antenna.

The process for applying a PVC layer to either of the hand tools 400, 500 shown in Figures 7 to 9 is as follows.

Firstly, the hand tool's metal body 400,502 is cleaned and degreased in an ultra sound machine, by sand-blasting or with chlorinated solvents. Second, a preliminary coating of fixing primer 457,569 is applied only to areas of the metal body to be coated with a layer 453,570 of PVC on the finished tool. Third, the fixing primer 457,569 is dried in ambient air for at least five minutes. Fourth, the fixing primer 457,569 is activated by heating the hand tool 400,500 for at least five minutes at a temperature greater than 100°C. The fixing primer permits the adherence of PVC to non-porous substrates like the metal body 400,502. Fifth, the hand tool 400,500 is dipped in liquid PVC (preferred colour: yellow + fluorescent pigment). Sixth, using an automated machine, the hand tool 400,500 is gently lifted at a rate which ensures a well-attached and even layer of PVC. Seventh, the layer 453,570 of PVC is heated to at least 100°C for up to fifteen minutes depending on the geometry and thermal inertia of the hand tool's body 400,502. The fifth, sixth and seventh steps may be repeated to attain the required thickness of the layer 453,570 of PVC and/or good density of colour. Eighth, the hand tools 400,500 are cooled in a blower machine to ensure homogeneity of the layer of PVC. Ninth, the layer 453,570 of PVC is cut and removed from areas of the metal body 400,502 without fixing primer and which are not a working area, or adjacent to a working area, of the hand tool 400, 500. The hand tool is finished and ready for identification, marking and packaging.

Referring to the hand wrench 500 shown in Figure 9, the RFID tag 109 is one which is designed to withstand temperatures of greater than 100°C, for example a Xarafy™ DASH-XS-HT ceramic RFID tag. The RFID tag 109 is attached to the hand wrench's metal body 502 before the second step of the above process. The layer 570 of PVC is applied over the RFID tag 109.

Referring to the hex wrench 400 shown in Figures 7 & 8, a strip of a flat side of the hex wrench's metal body 400 is spared the preliminary coating of fixing primer at the second step of the above process even though it will remain covered in the layer 453 of PVC after the ninth step of the above process. The fixing primer-free strip 458 extends from where the fixing primer begins on the other five flat sides of the hex wrench's metal body 400 to where the RFID tag 109 is located. The layer 453 of PVC is resilient and a pocket 453P of the layer 453 of PVC adjacent the primer-free strip 458 may be pulled away from the hex wrench's metal body 400 in the direction of arrow P because it is not fixed by the fixing primer. When the pocket 453P of the 453 layer of PVC is pulled back, the RFID tag may be slipped underneath in the direction of arrow S and left where it is shown in Figure 8. The pocket 453P of the 453 layer of PVC is released and relaxes to secure the RFID tag 109 against the hex wrench's metal body 400. Tension in the layer of PVC is sufficient to hold the RFID tag firmly to the hex wrench's metal body 400.

Important aspects of the PVC coating process and the hand tools:
Irrespective of the presence of an RFID tag 109, which is an optional feature of the hex key 400 and the hand wrench 500, the layer 453, 570 of PVC has a fluorescent pigment. This facilitates tracking the hand tool by sight, especially with the help of a flashlight which emits ultra-violet light. This may be beneficial when tracking a misplaced hand tool in a complex environment with multiple parts, such as in an aero-engine or a railway locomotive. The aero-engine maintenance sector is especially sensitive to what it calls "Foreign Object Damage" (FOD) and a RFID-tagged fluorescent tool contributes to minimizing FOD. Anti-FOD characteristics are maintained even if the fluorescent element is accidentally cut with a blade or subjected to abrasion: the use of the fixing primer renders the layer of PVC solid with the metal substrate. This solution is shock-resistant: the fluorescent layer of PVC does not easily break or flake off.

The PVC coating does not change the technical characteristics of the hand tools (no drilling, milling or any other modification to the principle geometry of the hand tools in order to have a fluorescent part) and it is an integrated function of the hand tools. The layer of PVC protects the metal body and the RFID tag from chemical products. The layer of PVC has a soft touch which is tactile, insulates from cold metal, and improves the ergonomics of the part of the hand tool manipulated by an operator. The layer of PVC does not alter the hand tool's ability to be cleaned. It provides an inexpensive way of adding fluorescent colour to consumable tools such as bits and sockets.

## Claims

1. A hand tool (200) comprising;
a handle (203) having a front portion (220) and a back portion (222);
a shaft (206) having a working end (224) and a connection end (226) opposite the working end (224) of the shaft, wherein the connection end (226) of the shaft (206) is connected to the front portion (220) of the handle (203); and
an electronic identification device (109),
the hand tool (200) further comprises a cap (215) connected to the handle (203), wherein the cap (215) is configured to encapsulate the electronic identification device (109) within a cavity (217) defined by the handle (203) and the cap (215), wherein the cap (215) is formed of a material which is transparent or partially-transparent to radio frequency energy in order to facilitate the transmission of signals to or from the electronic identification device (109), wherein the shaft (206) is made of metal, **characterized in that** the electronic identification device (109) is connected to the shaft (206) and wherein the cap (215) is connected to the front portion (220) of the handle (203).

2. A hand tool (200) as claimed in claim 1, wherein the cap (215) is substantially hemispherical shell with a central hole (215a) around the shaft (206) and a substantially circular base (215b) connected the handle (203) at a substantially circular section (203b) thereof.

3. A hand tool (200) as claimed in either one of claims 1 or 2, wherein the cap (215) is connected to the handle (220) by an interference fit or by a snap fit between the cap (215) and the handle (203).

4. A hand tool (200) as claimed in any one of the previous claims, wherein the cap (215) is glued to the handle (220).

5. A hand tool (200) as claimed in any one of the previous claims, wherein the handle (203) is formed of a material which is at least partially transparent to radio frequency energy.

6. A hand tool (200) as claimed in any one of the preceding claims, wherein the interior of the cap (215) is equipped with an elastomeric material (234) for protection of the electronic identification device (109), wherein the handle (203') has an irregular external profile (230) which corresponds to an irregular external profile (232) on the cap (215') and wherein alignment of the irregular external profiles (230,232) locates the elastomeric material (234) over the electronic identification device (109).

7. A hand tool (200) as claimed in any one of the previous claims, wherein the material of the handle (203) and/or the cap (215) comprise a fluorescent pigment.

8. A hand tool (200) as claimed in any one of the previous claims, wherein the hand tool is any one of a nut-driver, a screwdriver, a bit driver, a hammer, a mallet, a wrench, a pair of scissors, a knife, a file, a scraper, a spatula, a chisel, a chisel holder, an awl, a punch, a brush, a broom, an axe or a pry bar.

9. A method of assembling a hand tool (200) as claimed in any one of the previous claims, the method comprising the steps of connecting the cap (215) to the handle (203) and inserting a glue which is at least partially-transparent to radio frequency energy into the cavity (217) defined by the handle (203) and the cap (215) through a hole (215c) in the cap (215) thereby securing the cap (215) and the electronic identification device (109) to the hand tool (200).

## Patentansprüche

1. Ein Handwerkzeug (200), welches:
- einen Griff (203) mit einem vorderen Abschnitt (220) und einem hinteren Abschnitt (222);
- einen Schaft (206) mit einem Arbeitsende (224) und einem zum Arbeitsende (224) des Schafts entgegengesetzten Anschlussende (226), wobei das Anschlussende (226) des Schafts (206) an den Vorderabschnitt (220) des Griffs (203) angeschlossen ist; und
- eine elektronische Identifizierungsvorrichtung (109) umfasst, **dadurch gekennzeichnet, dass** das Handwerkzeug (200) darüber hinaus einen Deckel (215) umfasst, der an den Griff (203) angeschlossen ist, wobei der Deckel (215) konfiguriert ist, um die elektronische Identifizierungsvorrichtung (109) in einem, von dem Griff (203) und dem Deckel (215) gebildeten Hohlraum (217) einzukapseln, wobei der Deckel (215) aus einem Werkstoff gebildet ist, welcher für eine Funkfrequenzenergie transparent oder in Teilen transparent ist, um die Signalübertragung an die oder von der elektronischen Identifizierungsvorrichtung (109) zu erleichtert, und wobei der Schaft (206) aus Metall gebildet ist, **dadurch gekennzeichnet, dass** die elektronische Identifizierungsvorrichtung (109) an den Schaft (206) angeschlossen ist und wobei der Deckel (215) an den Vorderabschnitt (220) des Griffs (203) angeschlossen ist.

2. Ein Handwerkzeug (200) gemäß Anspruch 1, **dadurch gekennzeichnet, dass** der Deckel (215) im Wesentlichen eine hemisphärische Schale mit, um den Schaft (206) herum, einem zentralen Loch (215a) und einer, im Wesentlichen kreisförmigen Grundfläche (215b) bildet, die an den Griff (203) an einem seiner, im Wesentlichen kreisförmigen Querschnitte (203b) angeschlossen ist.

3. Ein Handwerkzeug (200) gemäß einem beliebigen der Ansprüche 1 oder 2, **dadurch gekennzeichnet, dass** der Deckel (215) anhand einer Presspassung oder einer Schnappbefestigung zwischen dem Deckel (215) und dem Griff (203) an den Griff (220) angeschlossen ist.

4. Ein Handwerkzeug (200) gemäß einem beliebigen der vorstehenden Ansprüche, **dadurch gekennzeichnet, dass** der Deckel (215) auf den Griff (220) geklebt ist.

5. Ein Handwerkzeug (200) gemäß einem beliebigen der vorstehenden Ansprüche, **dadurch gekennzeichnet, dass** der Griff (203) aus einem Werkstoff gebildet ist, welcher mindestens teilweise für Funkfrequenzenergie transparent ist.

6. Ein Handwerkzeug (200) gemäß einem beliebigen der vorstehenden Ansprüche, **dadurch gekennzeichnet, dass** der Deckel (215) innen mit einem elastomeren Werkstoff (234) zum Schutz der elektronischen Identifizierungsvorrichtung (109) bestückt ist, wobei der Griff (203') ein unregelmäßiges Außenprofil (230) aufweist, welches einem unregelmäßigen Außenprofil (232) auf dem Deckel (215') entspricht und wobei die Ausrichtung der unregelmäßigen Außenprofile (230, 232) den elastomeren Werkstoff (234) über die elektronische Identifizierungsvorrichtung (109) platziert.

7. Ein Handwerkzeug (200) gemäß einem beliebigen der vorstehenden Ansprüche, **dadurch gekennzeichnet, dass** der Werkstoff des Griffs (203) und/oder des Deckels (215) ein fluoreszierendes Pigment enthält.

8. Ein Handwerkzeug (200) gemäß einem beliebigen der vorstehenden Ansprüche, **dadurch gekennzeichnet, dass** das Handwerkzeug ein beliebiges aus folgenden Handwerkzeugen ist:
ein Mutterndreher, ein Schraubendreher, ein Bit-Schraubendreher, ein Hammer, ein Gummihammer, ein Schraubenschlüssel, eine Schere, ein Messer, eine Feile, eine Spachtel, ein Spatel, ein Meißel, ein Meißelhalter, eine Ahle, eine Stanze, eine Bürste, ein Besen, eine Achse oder ein Nageleisen.

9. Ein Verfahren zum Zusammenbau eines Handwerkzeugs (200) gemäß einem der vorstehenden Ansprüche, **dadurch gekennzeichnet, dass** das Verfahren folgende Schritte umfasst:
Anschluss des Deckels (215) an den Griff (203) und Einführen eines Klebstoffs, der mindestens teilweise für Funkfrequenzenergie transparent ist, in den Hohlraum (217), der durch den Griff (203) und den Deckel (215) definiert ist, und zwar durch ein Loch (215c) im Deckel (215), wodurch der Deckel (215) und die elektronische Identifizierungsvorrichtung (109) auf dem Handwerkzeug (200) befestigt wird.

## Revendications

1. Outil manuel (200) comprenant :
une poignée (203) ayant une partie avant (220) et une partie arrière (222) ;
un arbre (206) ayant une extrémité de travail (224) et une extrémité de connexion (226) opposée à l'extrémité de travail (224) de l'arbre, dans lequel l'extrémité de connexion (226) de l'arbre (206) est reliée à la partie avant (220) de la poignée (203) ; et
un dispositif d'identification électronique (109),
l'outil manuel (200) comprend en outre un capuchon (215) relié à la poignée (203), dans lequel le capuchon (215) est configuré pour encapsuler le dispositif d'identification électronique (109) à l'intérieur d'une cavité (217) définie par la poignée (203) et le capuchon (215), dans lequel le capuchon (215) est formé d'une matière qui est transparente ou partiellement transparente à une énergie radiofréquence afin de faciliter la transmission de signaux vers ou en provenance du dispositif d'identification électronique (109), dans lequel l'arbre (206) est fait de métal, **caractérisé en ce que** le dispositif d'identification électronique (109) est relié à l'arbre (206) et dans lequel le capuchon (215) est relié à la partie avant (220) de la poignée (203).

2. Outil manuel (200) selon la revendication 1, dans lequel le capuchon (215) est une coque sensiblement hémisphérique avec un trou central (215a) autour de l'arbre (206) et une base sensiblement circulaire (215b) reliée à la poignée (203) au niveau d'une section sensiblement circulaire (203b) de cette dernière.

3. Outil manuel (200) selon l'une des revendications 1 ou 2, dans lequel le capuchon (215) est relié à la poignée (220) par un ajustement avec serrage ou par un ajustement par encliquetage entre le capuchon (215) et la poignée (203).

4. Outil manuel (200) selon n'importe laquelle des revendications précédentes, dans lequel le capuchon (215) est collé à la poignée (220).

5. Outil manuel (200) selon n'importe laquelle des revendications précédentes, dans lequel la poignée (203) est formée d'une matière qui est au moins partiellement transparente à une énergie radiofréquence.

6. Outil manuel (200) selon n'importe laquelle des revendications précédentes, dans lequel l'intérieur du capuchon (215) est équipé d'une matière élastomère (234) pour la protection du dispositif d'identification électronique (109), dans lequel la poignée (203') a un profil externe irrégulier (230) qui correspond à un profil externe irrégulier (232) sur le capuchon (215') et dans lequel l'alignement des profils externes irréguliers (230, 232) place la matière élastomère (234) au-dessus du dispositif d'identification électronique (109).

7. Outil manuel (200) selon n'importe laquelle des revendications précédentes, dans lequel la matière de la poignée (203) et/ou du capuchon (215) comprend un pigment fluorescent.

8. Outil manuel (200) selon n'importe laquelle des revendications précédentes, dans lequel l'outil manuel est n'importe lequel d'une clé d'écrou, d'un tournevis, d'un dispositif d'entraînement de foret, d'un marteau, d'un maillet, d'une clé, d'une paire de ciseaux, d'un couteau, d'une lime, d'un racloir, d'une spatule, d'un burin, d'un support de burin, d'une alêne, d'un poinçon, d'une brosse, d'un balai, d'une hache ou d'un levier.

9. Procédé d'assemblage d'un outil manuel (200) selon n'importe laquelle des revendications précédentes, le procédé comprenant les étapes de connexion du capuchon (215) à la poignée (203) et d'insertion d'une colle qui est au moins partiellement transparente à une énergie radiofréquence dans la cavité (217) définie par la poignée (203) et le capuchon (215) à travers un trou (215c) dans le capuchon (215) fixant solidement de ce fait le capuchon (215) et le dispositif d'identification électronique (109) à l'outil manuel (200).
